# EUROPÄISCHE PATENTSCHRIFT

(11) **EP 1 014 543 B1**
(45) Veröffentlichungstag und Bekanntmachung des Hinweises auf die Patenterteilung: **18.10.2006**
(21) Anmeldenummer: 99123794.2
(22) Anmeldetag: 01.12.1999
(51) Int. Cl.: H02K 23/08, H02K 7/106, H02P 3/06

(54) **Reihenschlussmotor mit Kommutator**
Series motor with commutator
Moteur serie avec commutateur

(30) Priorität: 24.12.1998 DE 19860262; 18.03.1999 DE 19912121
(43) Veröffentlichungstag der Anmeldung: 28.06.2000
(73) Patentinhaber: C. & E. Fein GmbH, 73529 Schwäbisch-Gmünd-Bargau (DE)
(72) Erfinder: Meyer, Christoph, 70599 Stuttgart (DE)
(74) Vertreter: Gahlert, Stefan

(56) Entgegenhaltungen:
- EP-A- 1 045 511
- WO-A-91/03866
- WO-A-97/36367
- DE-A- 3 636 555
- DE-A- 4 333 733
- US-A- 2 818 542
- US-A- 4 144 482

## Beschreibung

Die Erfindung betrifft einen Reihenschlußmotor mit Kommutator, insbesondere Universalmotor für ein gebremstes Elektrowerkzeug, mit einer Schalteinrichtung zur Umschaltung zwischen Motorbetrieb und Bremsbetrieb, wobei im Motorbetrieb mindestens eine Feldwicklung mit einer Ankerwicklung in einem von einer Versorgungsspannung beaufschlagten Motorstromkreis in Reihe geschaltet ist, und wobei im Bremsbetrieb die mindestens eine Feldwicklung mit der Ankerwicklung einen geschlossenen und von der Versorgungsspannng abgetrennten Bremsstromkreis bildet. Ein derartiger Reihenschlußmotor ist aus der EP 0 471 038 B1 bekannt.

Der bekannte Motor ist insbesondere zum Antrieb von gebremsten Elektrowerkzeugen, wie etwa gebremsten Winkelschleifern oder Kreissägen geeignet und verwendet hierzu einen zwischen Motor-und Bremsbetrieb umschaltenden mehrpoligen Umschalter, mittels dessen der Motor im Bremsbetrieb kurzgeschlossen und die Feldwicklung umgepolt wird, sowie Mittel zur Begrenzung des Bremsstroms durch die Feldwicklung. Es soll auf diese Weise eine sanfte und schnelle Kurzschlußbremsung durch eine eigenständige Selbsterregung ermöglicht werden. Der Anker ist im Motorbetrieb zwischen die Feldwicklungen und die Wendepolwicklungen geschaltet, wobei im Bremsbetrieb ein Strompfad zwischen dem Anker und den Wendepolwicklungen geschaltet ist, der eine Zenerdiodenanordnung zur Begrenzung des Bremsstroms enthält, so daß nur ein bestimmter Anteil des Bremsstroms über die Feldwicklungen fließt.

Mit einem derartigen Motor läßt sich zwar eine relativ zuverlässige Bremsung des Motors bei Umschaltung in den Bremsbetrieb erreichen, jedoch hat sich gezeigt, daß trotzdem in Einzelfällen die Bremsung erst bei kleiner werdenden Drehzahlen später einsetzt. Der Grund hierfür besteht darin, daß bei Motoren, die nicht einwandfrei kommutieren, ein relativ hoher Übergangswiderstand zwischen Kollektor und Bürsten bestehen kann, insbesondere bei hohen Drehzahlen und etwa bei leicht unrundem Kollektor. In diesen Fällen reicht die Remanenz für die Selbsterregung nicht aus, um eine Bremswirkung zu erzeugen.

Es wurde bereits versucht, derartige Probleme zu umgehen, indem ein Kondensator, der im Motorbetrieb aufgeladen wird, im Bremsbetrieb zur Einleitung der Selbsterregung genutzt wird (DE 36 36 555 A1).

Als nachteilig bei dieser Anordnung ist die Elektronik anzusehen, die naturgemäß einem Ausfallrisiko unterliegt und somit zu einer Herabsetzung der Funktionssicherheit der Bremse führt. Außerdem kann die Kondensatorladung nur einmal zur Einleitung der Bremsung genutzt werden. Reicht die Kondensatorladung nicht aus, um die Bremsung einzuleiten, so ist nach der Kondensatorentladung erst recht nicht mehr mit einer Einleitung der Bremsung zu rechnen.

Aus der US-A-2 818 542 ist ein Gleichstrom-Nebenschlußmotor bekannt, der für stationären Einsatz vorgesehen ist. Hierbei wird zur Verstärkung der Bremswirkung im Bremsfall eine über einen Generator erzeugte oder über einen Transformator erzeugte, gleichgerichtete Wechselspannung der Betriebsspannung überlagert, um im Bremsfall einen verstärkten Magnetfluß zum Zwecke einer möglichen schnellen Abbremsung zu erzeugen.

Ein derartiger Motor ist ein in keiner Weise als Antrieb für ein gebremstes Elektrowerkzeug geeignet. Hierzu muß vielmehr ein Reihenschlußmotor mit Kommutator, vorzugsweise ein Universalmotor verwendet werden und eine zu abrupte Abbremsung vermieden werden, da dies insbesondere bei Winkelschleifern zu einem erheblichen Gefährdungspotential führen würde. Weiterhin ist aus der DE 4333733 A1 ein Reihenschlußmotor nach dem Oberbegriff des Patentanspruchs 1 bekannt.

Die Aufgabe der Erfindung besteht darin, einen verbesserten Reihenschlußmotor zu schaffen, mit dem die Zuverlässigkeit der Bremsung bei Umschaltung vom Motorbetrieb in den Bremsbetrieb verbessert wird.

Diese Aufgabe wird bei einem Reihenschlußmotor gemäß der eingangs genannten Art durch eine netzgespeisten Transformator gelöst, dessen Sekundärwicklung im Bremsstromkreis liegt.

Die Aufgabe der Erfindung wird auf diese Weise vollkommen gelöst.

Durch die Sekundärwicklung des Transformators wird ein Wechselstrom in den Bremsstromkreis eingeführt, der ausreicht, um eine zuverlässige Selbsterregung des Motors einzuleiten. Die in der Ankerwicklung induzierte Remanenz-Gleichspannung und die vom Trafostrom herrührende Wechselspannung überlagern sich.

Auf diese Weise wird erfindungsgemäß selbst in äußerst ungünstigen Fällen bei hohen Übergangswiderständen zwischen Kollektor und Bürsten eine schnelle Einleitung der Bremsung bei Umschaltung in den Bremsbetrieb sichergestellt.

In vorteilhafter Weiterbildung der Erfindung bildet die mindestens eine Feldwicklung mit mindestens einer Wendepolwicklung und mit der Ankerwicklung im Bremsbetrieb einen geschlossenen Stromkreis.

Durch diese Maßnahme wird die Bremswirkung des Motors weiter verbessert. Die Wendepolwicklung kann mit einem relativ geringen Querschnitt ausgelegt werden, da sie nur im Bremsbetrieb von Strom durchflossen wird, nicht jedoch im Motorbetrieb.

Gemäß einer weiteren Ausgestaltung der Erfindung ist die Sekundärwicklung des Transformators im Bremsbetrieb im Bremsstromkreis in Reihe mit der zumindest einen Feldwicklung geschaltet.

Bei dieser Ausführung wird die Sekundärwicklung des Transformators während des Bremsbetriebes vom Bremsstrom durchflossen und muß damit auch ausreichend dimensioniert sein, also bei einem üblichen, mit 230 Volt betriebenen Universalmotor für einen Stromfluß von etwa 5 Ampere ausgelegt sein. Für einen derartigen Universalmotor wird der Transformator so ausgelegt, daß die Sekundärspannung vorzugsweise im Bereich von etwa 2 bis 3 Volt, vorzugsweise von etwa 2,5 Volt liegt.

Gemäß einer weiteren Ausgestaltung der Erfindung liegt die Sekundärwicklung des Transformators im Bremsbetrieb im Bremsstromkreis in einem zur Feldwicklung parallelen Kreis.

Dabei ist bevorzugt die Sekundärwicklung mit einem Widerstand in Reihe geschaltet, um so den Stromfluß durch die Sekundärwicklung des Transformators zu begrenzen.

Auf diese Weise wird es ermöglicht, daß ein handelsüblicher Transformator verwendet werden kann, da die Sekundärwicklung des Transformators nicht unmittelbar vom Bremsstrom durchflossen wird. Wenn der Widerstand Kollektor/Bürste hoch ist, fließt der Sekundärstrom durch die Feldwicklung, was eine Erhöhung der induzierten Spannung im Anker zur Folge hat. Eine höhere induzierte Spannung im Anker führt zu einem sicheren Einleiten der Bremsung. Mit fortschreitender Verzögerung des Motors fällt der Übergangswiderstand zwischen Kollektor und Bürsten deutlich ab, so daß zu einem späteren Zeitpunkt der Hauptstromfluß über die Ankerwicklung erfolgt, während der Stromfluß durch die Sekundärseite des Transformators durch den Widerstand begrenzt werden kann.

Insgesamt kann die Sekundärwicklung des Transformators so ausgelegt werden, daß die Sekundärspannung z.B. etwa 3 Volt effektiv beträgt, wozu ein Vorwiderstand von 20 Ohm verwendet wird, um so einen Stromfluß von etwa 150 mA effektiv zu erreichen. Hierzu ist ein handelsüblicher Transformator kleiner Baugröße ausreichend.

In vorteilhafter Weiterbildung der Erfindung ist im Bremsstromkreis in einem zu der zumindest einen Feldwicklung parallelen Strompfad eine Spannungsbegrenzungseinrichtung zur Begrenzung der an der Ankerwicklung induzierten Spannung vorgesehen.

Durch eine derartige Maßnahme wird das Bürstenfeuer herabgesetzt.

Die Spannungsbegrenzungseinrichtung kann zur Begrenzung an der mindestens einen Feldwicklung anliegenden Spannung derart ausgelegt sein, daß diese beispielsweise auf etwa fünf Volt begrenzt wird.

Hierbei kann die Sekundärwicklung des Transformators mit einem Ende mit der mindestens einen Feldwicklung verbunden sein und mit ihrem anderen Ende mit der Ankerwicklung und mit einem Ende der Spannungsbegrenzungseinrichtung verbunden sein.

In alternativer Weise liegen im Bremsstromkreis die Ankerwicklung und die zumindest eine Wendepolwicklung in Reihe und sind parallel zu der Spannungsbegrenzungseinrichtung und dem über die sekundärwicklung des Transformators gebildeten Strompfad an die mindestens eine Feldwicklung angeschlossen.

Die Strombegrenzungseinrichtung ist vorzugsweise als Diodenstrecke mit antiparallel zueinander geschalteten Dioden ausgebildet.

Gemäß einer alternativen Ausführung der Erfindung wird die Aufgabe bei einem Reihenmotor gemäß der eingangs genannten Art dadurch gelöst, daß ein netzgespeister Transformator vorgesehen ist, dessen Sekundärwicklung im Bremsstromkreis liegt, daß im Bremsstromkreis eine Begrenzungseinrichtung in Form einer Transistorschaltung zur Begrenzung der an der Ankerwicklung induzierten Spannung vorgesehen ist, und daß im Bremsstromkreis eine Diode in Reihe mit der mindestens einen Feldwicklung geschaltet ist.

Auch auf diese Weise wird die Aufgabe der Erfindung vollkommen gelöst.

Eine Transistorschaltung läßt sich deutlich kostengünstiger als eine entsprechend dimensionierte Diodenstrecke realisieren. Durch die im Bremsstromkreis in Reihe mit der mindestens einen Feldwicklung geschaltete Diode wird die Stromrichtung bei der Selbsterregung unabhängig von der vorhandenen Remanenz aufgeprägt.

Gemäß einer weiteren Ausführung der Erfindung ist eine Diode in Reihe mit der Sekundärwicklung des Transformators geschaltet.

Durch diese Maßnahme wird nur eine Halbwelle der Wechselspannung für den Transformator genutzt, der Transformator also nur mit der halben Effektivspannung im Sekundärkreis betrieben wird, wodurch im Vergleich zur Verwendung eines Widerstandes im Sekundärkreis die Verlustleistung herabgesetzt wird. Auf diese Weise kann ein kostengünstiger, handelsüblicher Transformator verwendet werden.

Eine besonders vorteilhafte Ausführung ergibt sich, wenn die Begrenzungseinrichtung einen Feldeffekttransistor aufweist, der bei Erreichen seiner Schwellspannung durchschaltet, um die an der mindestens einen Feldwicklung abfallende Spannung zu begrenzen.

Bei einer Auslegung des Motors auf eine Nennbetriebsspannung von 230 Volt Wechsel und bei einer Motorleistung von etwa 2500 Watt kann hierbei vorteilhaft unmittelbar die Eigenschaft eines handelsüblichen MOSFET ausgenutzt werden, erst bei Erreichen einer Schwellspannung zwischen etwa 4,5 und 5 Volt zwischen Drain und Source leitfähig zu werden. In diesem Fall liegt der MOSFET im Bremsbetrieb mit Gate und Drain an einem Ende der mindestens einen Feldwicklung und mit Source am anderen Ende der mindestens einen Feldwicklung, wobei natürlich im Bremsstromkreis eine Diode zur Aufprägung der Stromrichtung vorgesehen ist. Soll die durch den MOSFET bewirkte Spannungsbegrenzung schon bei einer niedrigeren Schwellspannung (Logic Level MOSFET) unterhalb von etwa 4,5 bis 5 Volt einsetzen, so kann hierzu ein spezieller MOSFET mit niedriger Schwellspannung eingesetzt werden, der schon bei einer Schwellspannung von etwa 2 Volt leitfähig wird. Hierdurch wird die Intensität der Bremsung herabgesetzt.

Es versteht sich, daß natürlich auch ein Spannungsteiler zur Ansteuerung des MOSFET verwendet werden kann, sofern eine Spannungsbegrenzung erst bei Erreichen einer höheren Schwellspannung gewünscht ist. In diesem Falle läßt sich die Bremscharakteristik durch Auslegung des Spannungsteilers an einen gewünschten Wert anpassen.

Gemäß einer weiteren Variante der Erfindung wird ein bipolarer Transistor für die Begrenzungseinrichtung verwendet, der mit seiner Basis an den Spannungsteiler angeschlossen sein kann. Da die Schwellspannung bei einem bipolaren Transistor bei etwa 0,7 Volt liegt, ist hierzu die Verwendung eines Spannungsteilers notwendig, der in geeigneter Weise ausgelegt wird, um die gewünschte Bremscharakteristik zu erzeugen. Es ist auch möglich, den bipolaren Transistor über eine Zenerdiode an seiner Basis anzusteuern.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein vereinfachtes Schaltbild des erfindungsgemäßen Motors im Motorbetrieb;
- Fig. 2: die Schaltung gemäß Fig. 1 im Bremsbetrieb;
- Fig. 3: eine Abwandlung der Schaltung gemäß Fig. 2 im Motorbetrieb;
- Fig. 4: eine weitere Abwandlung der Schaltung gemäß Fig. 3 im Bremsbetrieb;
- Fig. 5: eine Abwandlung der Schaltung gemäß Fig. 2 im Bremsbetrieb und
- Fig. 6: eine weitere Abwandlung der Schaltung gemäß Fig. 2 im Bremsbetrieb.

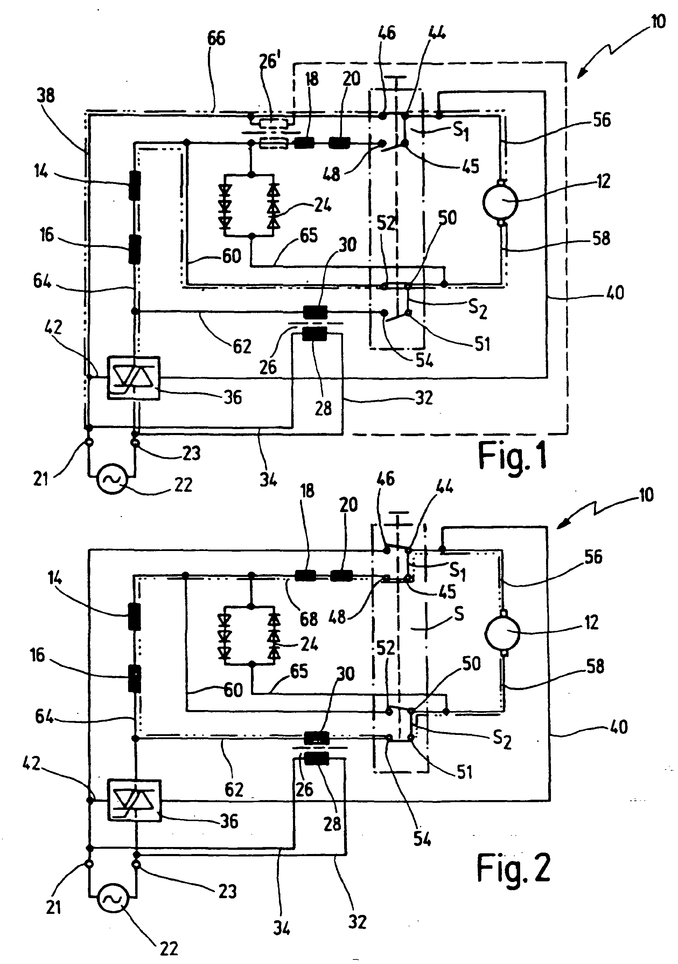

Ein erfindungsgemäßer Reihenschlußmotor ist in den Fig. 1 und 2 insgesamt mit der Ziffer 10 bezeichnet.

Der Motor 10 umfaßt einen Anker mit einer Ankerwicklung 12, die über einen nicht dargestellten Kommutator und lediglich schematisch angedeutete Bürsten über einen Schalter S im Motorbetrieb gemäß Fig. 1 in Reihe mit einer Speisespannungsquelle 22 schaltbar ist, die eine Wechselspannung von 230 Volt abgibt.

Bei dem Schalter S handelt es sich um einen zweipoligen Umschalter mit einem ersten Umschalter S₁ und einem zweiten Umschalter S₂. Der erste Pol 21 der Speisespannungsquelle 22 ist über eine Leitung 38 mit einem ersten Umschaltkontakt 46 des ersten Umschalters S₁ verbunden, der in dem in Fig. 1 dargestellten Motorbetrieb mit zwei miteinander verbundenen Schaltkontakten 44 und 45 des Umschalters S₁ verbunden ist, die wiederum über eine Leitung 56 mit einem Pol der Ankerwicklung 12 gekoppelt sind. Der zweite Pol der Ankerwicklung 12 ist über eine Leitung 58 mit zwei miteinander verbundenen Kontakten 50 und 51 des zweiten Umschalters S₂ verbunden, die wiederum in der gezeichneten Schaltstellung mit einem Kontakt 52 verbunden sind, der über eine Leitung 60 mit einem ersten Ende einer ersten Feldwicklung 14 gekoppelt ist, die mit der zweiten Feldwicklung 16 in Reihe geschaltet ist und über eine Steuerelektronik 36 mit dem zweiten Pol 23 der Speisespannungsquelle 22 verbunden ist. Die Steuerelektronik 36 ist zusätzlich über eine Steuerleitung 42 mit dem anderen Pol 21 der Speisespannungsquelle 22 und über eine Steuerleitung 40 mit den Kontakten 44 und 45 des ersten Umschalters S₁ gekoppelt.

Die Steuerelektronik 36 dient zur Begrenzung des Anlaufstroms beim Anschalten des Motors, zur Begrenzung der Leerlaufdrehzahl des Motors und verhindert es, daß der Motor anläuft, wenn ein Stecker zur Verbindung mit der Speisespannungsquelle 22 eingesteckt wird, während sich der Schalter S in der in Fig. 1 gezeichneten Einschaltstellung befindet. Diese an sich bekannte Steuerelektronik 36 ist mit der Feldwicklung 16 verbunden, während die zweite Feldwicklung 14 über den Schalter S mit der Ankerwicklung 12 und diese wiederum mit dem anderen Pol der Speisespannungsquelle 22 gekoppelt ist. Durch diese Anordnung wird die Entstörung des Reihenschlußmotors 10 erleichtert.

Der so im Motorbetrieb geschlossene Motorstromkreis 66, in dem die Ankerwicklung 12, die beiden Feldwicklungen 14, 16 und die Steuerelektronik 36 enthalten sind, ist in Fig. 1 durch eine mit drei Punkten strichpunktierte Linie verdeutlicht.

Der zweite Umschaltkontakt 48 des ersten Umschalters S₁ steht über zwei in Reihe geschaltete Wendepolwicklungen 18, 20 mit dem Anschluß der ersten Feldwicklung 14 in Verbindung, der über die Leitung 60 gleichfalls über die Kontakte 52, 50 mit der Ankerwicklung verbunden ist.

Zwischen dem einen Ende der Feldwicklung 14 und der Wendepolwicklung 18 ist eine Spannungsbegrenzungseinrichtung 24, die aus zwei zueinander antiparallel geschalteten Diodenstrecken besteht, mit einem Ende angeschlossen und mit ihrem anderen Ende über eine Leitung 65 mit den Kontakten 50 bzw. 51 des Schalters S₂ bzw. der mit der Ankerwicklung 12 verbundenen Leitung 58 verbunden.

Wird nun die Schalteinrichtung S aus der in Fig. 1 gezeichneten Stellung (Motorbetrieb) in die in Fig. 2 gezeichnete Stellung (Bremsbetrieb) umgeschaltet, also der Kontakt 45 des ersten Umschalters S₁ mit dem Kontakt 48 verbunden, während die Verbindung des Kontaktes 44 mit dem Kontakt 46 geöffnet wird, und der Kontakt 51 des zweiten Umschalters S₂ mit dem Kontakt 54 verbunden, während die Verbindung des Kontaktes 50 mit dem Kontakt 52 geöffnet wird, so ergibt sich die in Fig. 2 gezeichnete Schalung, in der der nunmehr geschlossene Bremsstromkreis 68 wiederum strichpunktiert verdeutlicht ist.

Hierbei ist der erste Pol der Speisespannungsquelle 22 durch Öffnen der Verbindung zwischen den Kontakten 44, 46 des ersten Umschalters S₁ vom Bremsstromkreis 68 abgetrennt.

Ein insgesamt mit der Ziffer 26 bezeichneter Transformator ist mit seiner Primärseite 28 ständig an die beiden Pole 21, 23 der Speisespannungsquelle 22 angeschlossen. Der Transformator 26 ist mit seiner Sekundärwicklung 30 über eine Leitung 62 mit der Leitung 64 verbunden, die einerseits mit der einen Feldwicklung 16 und andererseits mit der Steuerelektronik 36 verbunden ist, über die die Feldwicklung 16 am Speisespannungspol 23 angeschlossen ist. Das andere Ende der Sekundärwicklung 30 des Transformators 26 ist an den Kontakt 54 des zweiten Umschalters S₂ angeschlossen, der im Motorbetrieb gemäß Fig. 1 geöffnet ist und im Bremsbetrieb gemäß Fig. 2 mit den Kontakten 50, 51 verbunden ist, während die Verbindung zwischen den Kontakten 50, 52 im Bremsbetrieb unterbrochen ist.

Die Sekundärwicklung 30 des Transformators 26 ist somit mit einem Ende an die Feldwicklung 16 angeschlossen und mit ihrem anderen Ende an die Ankerwicklung 12 angeschlossen.

Insgesamt ergibt sich auf diese Weise im Bremsbetrieb gemäß Fig. 2 ein geschlossener Bremsstromkreis 68, in dem die beiden Feldwicklungen 14, 16, die Sekundärwicklung 30 des Transformators 26, die Ankerwicklung 12 und die beiden Wendepolwicklungen 18, 20 in Reihe geschaltet sind.

Ferner ist, wie zuvor bereits erwähnt, die Spannungsbegrenzungsschaltung 24 zwischen der Feldwicklung 14 und der Wendepolwicklung 18 auf der einen Seite und auf der anderen Seite zwischen der Sekundärwicklung 30 und der Ankerwicklung 12 angeschlossen.

Die Spannungsbegrenzungsschaltung 24 ist so ausgelegt, daß die beiden antiparallel geschalteten Diodenstrecken bei etwa 5 Volt leitfähig werden, so daß die Summe der in der Ankerwicklung 12 induzierten und an den beiden Wendepolwicklungen 18, 20 abfallenden Spannung auf maximal 5 Volt begrenzt wird.

Der Transformator 26 ist nun so ausgelegt, daß bei einer Eingangsspannung an der Primärwicklung von 230 Volt an der Sekundärwicklung 30 eine Ausgangsspannung von etwa 2,5 Volt effektiv anliegt. Der Innenwiderstand der Sekundärwicklung 30 ist sehr klein gehalten und im dargestellten Beispiel mit ungefähr 0,2 Ohm gewählt. Zusammen mit dem höheren Widerstand der Feldwicklungen 14, 16 (Gleichstromwiderstand etwa 1 Ohm, Wechselstromimpedanz bei 50 Hz ca. 20 Ohm) und den Impedanzen der Wendepolwicklungen 18, 20 und der Ankerwicklung 12 ergibt sich ein Stromfluß von etwa 150 mA bei der Sekundärspannung von 2,5 Volt.

Mit einem derartigen Stromfluß ist eine sichere Erregung des Motors im Bremsbetrieb gewährleistet.

Nach Einleitung der Bremsung steigt die an den Feldwicklungen 14, 16 induzierte Gleichspannung an und wird durch die Spannungsbegrenzungseinrichtung 24 auf maximal 5 Volt begrenzt, was zu einem Bremsstrom von maximal etwa 5 Ampere führt.

Andererseits besitzt der Transformator 26 im Motorbetrieb bei offener Sekundärwicklung 30 nur eine geringe Verlustleistung.

Allerdings muß die Sekundärwicklung 30 des Transformators 26 für den vollen maximalen Bremsstrom von etwa 5 Ampere ausgelegt sein.

Es versteht sich, daß der Transformator 26 entgegen der Darstellung gemäß Fig. 1 und 2 auch an anderer Stelle in den Bremsstromkreis eingefügt werden kann.

So ist beispielhaft in Fig. 1 gestrichelt der Transformator 26' eingezeichnet, der mit seiner Sekundärwicklung etwa zwischen der einen Feldwicklung 14 und der einen Wendepolwicklung 18 liegen könnte.

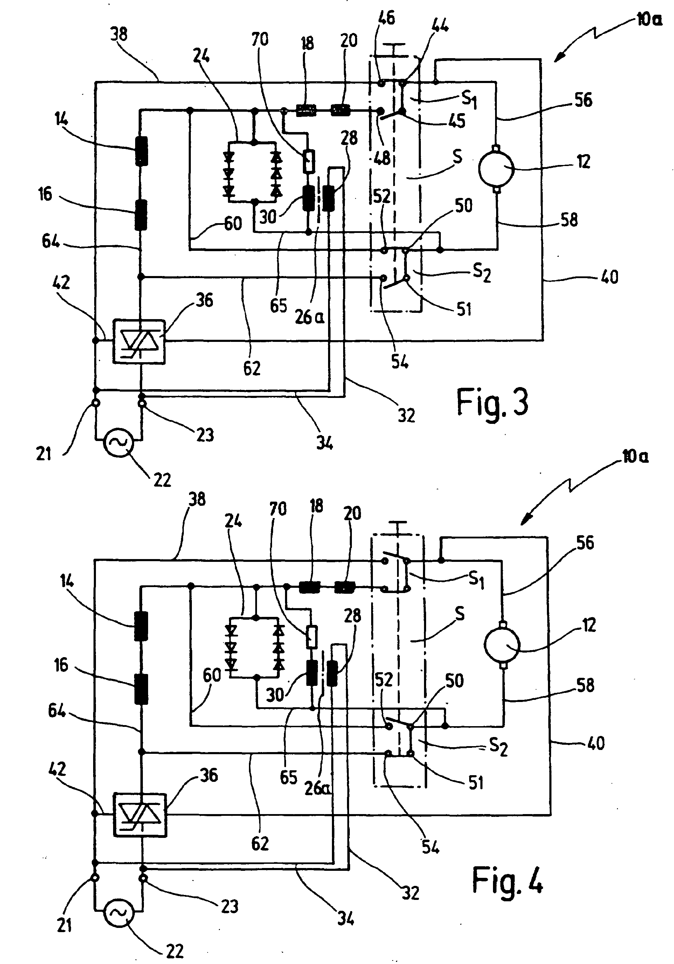

Eine Abwandlung der zuvor anhand der Fig. 1 und 2 dargestellten Ausführung des erfindungsgemäßen Reihenschlußmotors ist in den Fig. 3 und 4 dargestellt und insgesamt mit der Ziffer 10a bezeichnet.

Dabei werden für entsprechende Teile entsprechende Bezugsziffern verwendet.

Der Unterschied zu der Ausführung gemäß den Fig. 1 und 2 besteht darin, daß der Transformator 26a mit seiner Sekundärwicklung 30 nicht im Bremsstromkreis in Reihe geschaltet ist, sondern parallel zu der Spannungsbegrenzungseinrichtung 24 einerseits zwischen der Ankerwicklung 12 und der einen Feldwicklung 16 angeschlossen ist und andererseits über einen Widerstand 70 zwischen der anderen Feldwicklung 14 und der einen Wendepolwicklung 18 angeschlossen ist.

Im Vergleich zu der zuvor anhand der Fig. 1 und 2 beschriebenen Ausführung ergibt sich hierdurch der Vorteil, daß die Sekundärwicklung 30 des Transformators 26a nicht dem vollen maximalen Bremsstrom ausgesetzt ist. Mit seiner Primärseite 28 ist der Transformator 26a wiederum ständig an die beiden Pole 21, 23 der Speisespannungsquelle 22 angeschlossen.

Der Transformator wird bspw. so ausgelegt, daß er bei einer Primärspannung von 230 Volt effektiv eine Sekundärspannung von etwa 3 Volt effektiv liefert. Der Widerstand 70 kann nun so gewählt werden, daß sich ein Strom durch die Sekundärwicklung 30 von etwa 170 mA ergibt. Hierzu kann ein handelsüblicher Widerstand von 20 Ohm gewählt werden. Der Widerstand 70 kann auch durch eine Diode ersetzt werden, die der Strombegrenzung dient.

Bei dieser Auslegung ergibt sich eine zuverlässige Einleitung der Selbsterregung zur Bremsung. Steigt nun im Verlauf der Bremsung die Spannung an den Feldwicklungen 14, 16 bis auf maximal etwa 5 Volt an, so ergibt sich infolge des Widerstandes 70 nur eine geringfügige Erhöhung des Stromflusses durch die Sekundärwicklung 30 des Transformators 26a. Infolge dessen kann ein handelsüblicher Kleintransformator verwendet werden, was im Vergleich zu der zuvor anhand von Fig. 1 und 2 beschriebenen Ausführung eine Vereinfachung und Kostenersparnis bedeutet.

Gegenüber der Ausführung gemäß den Fig. 1 und 2, bei der die Sekundärwicklung des Transformators in Reihe mit den Feldwicklungen 14, 16 liegt, ergibt sich ferner der Vorteil, daß bei einem hohen Übergangswiderstand zwischen Kommutator und Bürsten der Stromfluß im Bremsbetrieb im wesentlichen über die Feldwicklungen 14, 16 erfolgt, wodurch die im Anker 12 induzierte Spannung erheblich größer wird. Dies führt zu einer sicheren Einleitung der Selbsterregung unabhängig vom Übergangswiderstand zwischen Kollektor und Bürsten.

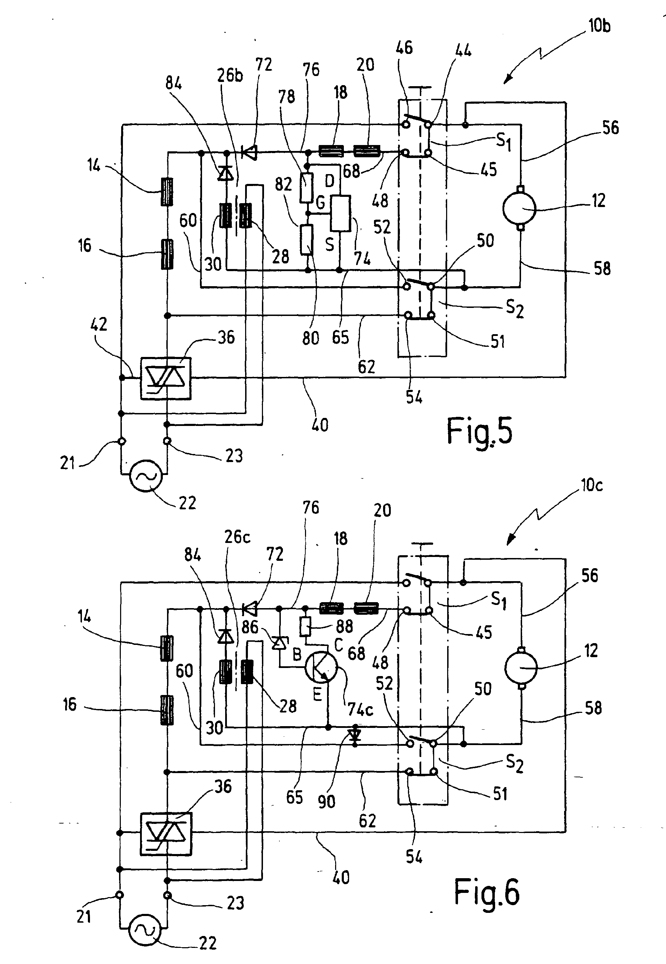

Zwei weitere Abwandlungen des erfindungsgemäßen Reihenschlußmotors, bei denen die zur Spannungsbegrenzung verwendete Diodenstrecke durch eine Transistorschaltung ersetzt ist, werden im folgenden anhand der Fig. 5 und 6 beschrieben.

Dabei werden wiederum gleiche Bezugsziffern wie zuvor für entsprechende Teile verwendet.

Fig. 5 zeigt einen insgesamt mit der Ziffer 10b bezeichneten Reihenschlußmotor im Bremsbetrieb, der sich von der zuvor anhand von Fig. 4 beschriebenen Ausführung im wesentlichen dadurch unterscheidet, daß die Begrenzungseinrichtung durch einen MOSFET 74 ersetzt wurde.

Der Vorwiderstand im Sekundärkreis des Transformators 26b wurde in diesem Fall durch eine Diode 84 ersetzt. Es wäre auch möglich, den Transformator 26b mit seiner Sekundärwicklung 30 an einer Seite an die Feldwicklung 14 anzuschließen und mit seiner anderen Seite an die Leitung 65, die mit dem Kontakt 50 des Schalters S₂ und damit über die Leitung 58 mit der Ankerwicklung 12 verbunden ist, sofern die Sekundärwicklung entsprechend ausgelegt ist.

An der Feldwicklung 14, die mit der Diode 84 verbunden ist, liegt ferner eine Diode 72 mit ihrer Kathode, die mit ihrer Anode über eine Leitung 76 mit der ersten Wendepolwicklung 18 verbunden ist. An die Leitung 76 ist der MOSFET 74 mit Drain D angeschlossen, der ferner mit Source S an die Leitung 65 angeschlossen ist. Das Gate G des MOSFET 74 ist über einen Spannungsteiler 82 mit den Widerständen 78 (1 Kiloohm) und 80 (6 Kiloohm) zwischen den Leitungen 76 und 65 angeschlossen.

Im übrigen entspricht der Aufbau der Schaltung vollständig der zuvor anhand von Fig. 4 beschriebenen Schaltung.

Durch die Diode 72 wird die Stromrichtung im Bremsstromkreis vorgegeben. Die Selbsterregung wird durch den Transformator 26b initiiert, so daß eine sichere Bremsung gewährleistet ist.

Steigt im Verlauf der Bremsung die induzierte Spannung soweit an, daß die Schwellspannung des MOSFET von etwa 4,5 bis 5 Volt erreicht wird, so wird dieser leitfähig und begrenzt einen weiteren Anstieg der induzierten Bremsspannung, so daß eine zu abrupte Bremswirkung vermieden wird.

Es hat sich gezeigt, daß bei der zuvor erwähnten Auslegung eines Motors für eine Nennbetriebsspannung von 230 Volt Wechsel bei einer Leistung von 2500 Watt der MOSFET 74 ggf. auch Gate G und Drain D gemeinsam an die Leitung 76 angeschlossen werden könnten, so daß sich eine äußerst einfache und zuverlässige Schaltung mit wenigen Bauteilen ergibt. Mittels des Spannungsteilers (1 KΩ/6 KΩ) kann jedoch der Bremsvorgang auf den gewünschten Wert eingestellt werden.

Eine weitere Variante eines erfindungsgemäßen Reihenschlußmotors unter Verwendung eines bipolaren Transistors 74c zur Begrenzung der Bremsspannung ist in Fig. 6 dargestellt und insgesamt mit der Ziffer 10c bezeichnet.

Auch hierbei liegt eine Diode 84 in Reihe mit der Sekundärwicklung 30 und ist mit ihrer Kathode mit der Feldwicklung 14 und der Kathode der anderen Diode 72 verbunden, die mit den Wendepolwicklungen 18, 20 in Reihe liegt.

Anstelle des MOSFET 74 gemäß Fig. 5 wird nunmehr ein bipolarer Transistor 74c verwendet, der mit seinem Kollektor C über einen Widerstand 78 (0,22 Ohm) an die Leitung 76 angeschlossen ist, die die Diode 72 mit der Wendepolwicklung 18 verbindet und der mit seinem Emitter E an die Leitung 65 angeschlossen ist, die das andere Ende der Sekundärwicklung 30 mit dem Kontakt 50 des Schalters S₂ verbindet. Die Basis B des Transistors 74c ist über einer Zenerdiode 86 von 3,6 V an die Leitung 76 angeschlossen. Des weiteren kann zusätzlich zwischen den Kontakten 50 und 52 eine Diode 90 angeschlossen sein, um bei einem ungünstigen Schaltverhalten des Schalters S₂ bei Umschaltung von motorbetriebenem Bremsbetrieb dem Auftreten eines Lichtbogeneffektes entgegenzuwirken. Im allgemeinen kann jedoch auch auf eine solche Diode 90 verzichtet werden.

Der Widerstand 78 im Kollektorstromkreis, der vorzugsweise mit etwa 0,22 Ohm dimensioniert wird, ist gleichfalls nicht unbedingt notwendig, unterstützt jedoch eine bessere Wärmeableitung von dem Transistor, da dieser räumlich getrennt vom Transistor auf der Schaltung untergebracht wird. Die Dimensionierung sollte so gewählt werden, daß der Spannungsabfall kleiner als der gewünschte Sollwert der Schwellspannung ist, bei dem der Transistor 74c leitfähig werden soll. Bei der vorstehend erläuterten Dimensionierung muß also der Spannungsabfall am Widerstand 78 kleiner als 5 Volt sein.

Grundsätzlich kann ein solcher Widerstand natürlich auch bei dem MOSFET 74 verwendet werden.

## Patentansprüche

1. Reihenschlußmotor mit Kommutator, insbesondere Universalmotor für ein gebremstes Elektrowerkzeug, mit einer Schalteinrichtung (S) zur Umschaltung zwischen Motorbetrieb und Bremsbetrieb, wobei im Motorbetrieb mindestens eine Feldwicklung (14, 16) mit einer Ankerwicklung (12) in einem von einer Versorgungsspannung (22) beaufschlagten Motorstromkreis (66) in Reihe geschaltet ist, und wobei im Bremsbetrieb die mindestens eine Feldwicklung (14, 16) mit der Ankerwicklung (12) einen geschlossenen und von der Versorgungsspannung (22) abgetrennten Bremsstromkreis (68) bildet, **gekennzeichnet durch** einen netzgespeisten Transformator (26, 26a, 26b, 26c), dessen Sekundärwicklung (30) im Bremsstromkreis (68) liegt.

2. Reihenschlußmotor nach Anspruch 1, **dadurch gekennzeichnet, daß** die mindestens eine Feldwicklung (14, 16) mit mindestens einer Wendepolwicklung (18, 20) und mit der Ankerwicklung (12) im Bremsbetrieb einen geschlossenen Stromkreis (68) bildet.

3. Reihenschlußmotor nach Anspruch 1 oder 2, **dadurch gekennzeichnet, daß** die Sekundärwicklung (30) des Transformators (26, 26a, 26b, 26c) im Bremsbetrieb im Bremsstromkreis (68) in Reihe mit der zumindest einen Feldwicklung (14, 16) geschaltet ist.

4. Reihenschlußmotor nach Anspruch 1 oder 2, **dadurch gekennzeichnet, daß** die Sekundärwicklung (30) des Transformators (26a, 26b, 26c) im Bremsbetrieb im Bremsstromkreis in einem zur Feldwicklung (14, 16) parallelen Stromkreis liegt.

5. Reihenschlußmotor nach Anspruch 4, **dadurch gekennzeichnet, daß** die Sekundärwicklung (30) des Transformators (26a) mit einem Widerstand (70) in Reihe geschaltet ist.

6. Reihenschlußmotor nach einem der vorhergehenden Ansprüche, **dadurch gekennzeichnet, daß** im Bremsstromkreis (68) in einem zu der zumindest einen Feldwicklung (14, 16) parallelen Strompfad eine Spannungsbegrenzungseinrichtung (24), vorzugsweise in Form zweier antiparallel miteinander verbundener Diodenstrecken, geschaltet ist.

7. Reihenschlußmotor nach Anspruch 6, **dadurch gekennzeichnet, daß** im Bremsstromkreis (68) die Sekundärwicklung (30) des Transformators (26) mit einem Ende mit der mindestens einen Feldwicklung (16) verbunden ist und mit ihrem anderen Ende mit der Ankerwicklung (12) und mit einem Ende der Spannungsbegrenzungseinrichtung (24) verbunden ist.

8. Reihenschlußmotor nach Anspruch 6 oder 7, **dadurch gekennzeichnet, daß** im Bremsstromkreis die Ankerwicklung (12) und zumindest eine Wendepolwicklung (18, 20) in Reihe liegen und parallel zu der Spannungsbegrenzungseinrichtung (24) und dem über die Sekundärwicklung (30) des Transformators (26a) und den Widerstand (70) gebildeten Strompfad an die mindestens eine Feldwicklung (14, 16) angeschlossen sind.

9. Reihenschlußmotor mit Kommutator, insbesondere Universalmotor für ein gebremstes Elektrowerkzeug, mit einer Schalteinrichtung (S) zur Umschaltung zwischen Motorbetrieb und Bremsbetrieb, wobei im Motorbetrieb mindestens eine Feldwicklung (14, 16) mit einer Ankerwicklung (12) in einem von einer Versorgungsspannung (22) beaufschlagten Motorstromkreis (66) in Reihe geschaltet ist, und wobei im Bremsbetrieb die mindestens eine Feldwicklung (14, 16) mit der Ankerwicklung (12) einen geschlossenen und von der Versorgungsspannung (22) abgetrennten Bremsstromkreis (68) bildet, **dadurch gekennzeichnet, daß** ein netzgespeister Transformator (26, 26a, 26b, 26c) vorgesehen ist, dessen Sekundärwicklung (30) im Bremsstromkreis (68) liegt, daß im Bremsstromkreis (68) eine Begrenzungseinrichtung (74, 74c) in Form einer Transistorschaltung zur Begrenzung der an der Ankerwicklung (12) induzierten Spannung vorgesehen ist, und daß im Bremstromkreis eine Diode (72) in Reihe mit der mindestens einen Feldwicklung (14, 16) geschaltet ist.

10. Reihenschlußmotor nach Anspruch 9, **dadurch gekennzeichnet, daß** eine Diode (84) in Reihe mit der Sekundärwicklung (30) des Transformators (26b, 26c) geschaltet ist.

11. Reihenschlußmotor nach Anspruch 9 oder 10, **dadurch gekennzeichnet, daß** die Begrenzungseinrichtung (74, 74c) dazu ausgebildet ist, bei Erreichen einer Schwellspannung an der mindestens einen Feldwicklung (14, 16) einen Stromfluß parallel zu der mindestens einen Feldwicklung (14, 16) zu erzeugen.

12. Reihenschlußmotor nach Anspruch 11, **dadurch gekennzeichnet, daß** die Begrenzungseinrichtung einen Feldeffekttransistor (74) aufweist, der bei Erreichen seiner Schwellspannung durchschaltet, um die an der mindestens einen Feldwicklung (14, 16) abfallende Spannung zu begrenzen.

13. Reihenschlußmotor nach Anspruch 12, **dadurch gekennzeichnet, daß** der Feldeffekttransistor (74) mit Drain (D) auf einer Seite der mindestens einen Feldwicklung (14, 16), vorzugsweise zwischen der Diode (72) und einer Wendepolwicklung (18), angeschlossen ist, daß der Feldeffekttransistor mit Gate (G) an einen Spannungsteiler (82) angeschlossen ist, der parallel zu der mindestens einen Feldwicklung (14, 16) angeschlossen ist.

14. Reihenschlußmotor nach Anspruch einem der Ansprüche 9 bis 11, **dadurch gekennzeichnet, daß** die Begrenzungseinrichtung einen bipolaren Transistor (74c) aufweist, der mit seiner Basis (B) vorzugsweise über eine Zenerdiode (84) zwischen der Diode (72) und einer Wendepolwicklung (18) angeschlossen ist.

## Claims

1. A series motor with commutator, in particular a universal motor for a braked power tool, having switching means (S₁, S₂) for switching between motor mode and braking mode, wherein, in motor mode, at least one field winding (14, 16) is connected in series with an armature winding (12) in a motor circuit (66) to which a supply voltage (22) is supplied, and wherein, in braking mode, the at least one field winding (14, 16) and the armature winding (12) form together a closed braking circuit (68) disconnected from the supply voltage (22), **characterized by** a mains-operated transformer (26, 26a, 26b, 26c) whose secondary winding (30) is connected within the braking circuit (68).

2. The series motor of claim 1, **characterized in that** the at least one field winding (14, 16), in braking mode, forms a closed circuit (68) comprising at least one commutating winding (18, 20) and the armature winding (12).

3. The series motor of claim 1 or claim 2, **characterized in that** the secondary winding (30) of the transformer (26, 26a, 26b, 26c), in braking mode, is connected in series, in the braking circuit (68), to the at least one field winding (14, 16).

4. The series motor of claim 1 or claim 2, **characterized in that** the secondary winding (30) of the transformer (26a, 26b, 26c), in braking mode, lies in the braking circuit in a circuit parallel to the field winding (14, 16).

5. The series motor as defined in claim 4, **characterized in that** the secondary winding (30) of the transformer (26a) is connected in series to a resistor (70).

6. The series motor of any of the preceding claims, **characterized in that** limiting means (24, 74, 74c) are provided in the braking circuit (68) for limiting the voltage induced at the armature winding (12).

7. The series motor of claim 6, **characterized in that** the secondary winding (30) of the transformer (26) is connected with one of its ends to the at least one field winding (16) and with its other end to the armature winding (12) and one end of the limiting means (24).

8. The series motor as of claim 6 or 7, **characterized in that** the armature winding (12) and the at least one commutating winding (18, 20) are connected in series in the braking circuit and are connected to the at least one field winding (14, 16), in parallel to the voltage limiting means (24) and the current path formed through the secondary winding (30) of the transformer (26a) and through the resistor (70).

9. A series motor comprising a commutator, in particular a universal motor for a braked power tool, comprising a switching means (S) for switching between motor mode and braking mode, wherein, in motor mode, at least one field winding (14, 16) is connected in series with an armature winding (12) in a motor circuit (66) to which a supply voltage is supplied, and wherein, in braking mode, the at least one field winding (14, 16) and the armature winding (12) form together a closed braking circuit (68) disconnected from the supply voltage, **characterized in that** a mains-operated transformer (26, 26a, 26b, 26c) is provided, the secondary winding (30) of which is connected within the braking circuit (68), that within the braking circuit (68) a limiting means (74, 74c) configured as a transistor circuit is provided for limiting the voltage induced at the armature winding (12), and **in that** within the braking circuit a diode (72) is connected in series with the at least one field winding (14, 16).

10. The series motor of claim 9, **characterized in that** a diode (84) is connected in series to the secondary winding (30) of the transformer (26b, 26c).

11. The series motor of claim 9 or 10, **characterized in that** the limiting means (74, 74c) is configured for effecting a current flow in parallel to the at least one field winding (14, 16) upon reaching a threshold voltage at the at least one field winding.

12. The series motor of claim 11, **characterized in that** the limiting means comprises a field effect transistor (74) that switches through when reaching its threshold voltage in order to limit the voltage dropping at the at least one field winding (14, 16).

13. The series motor of claim 12, **characterized in that** the field effect transistor (74) has its drain (D) connected to one side of the at least one field winding (14, 16), preferably between the diode (72) and a commutating winding (18), and that the field effect transtor has its gate (G) connected to a voltage divider (82) which is connected in parallel to the at least one field winding (14, 16).

14. The series motor of any of claims 9 to 11, **characterized in that** the limiting means comprises a bipolar transistor (74c) which is connected with its base (B), preferably via a Zener diode (84), between the diode (72) and a commutating winding (18).

## Revendications

1. Moteur série à collecteur, en particulier moteur universel pour un outil électrique freiné, comportant un dispositif de commutation (S) pour basculer entre le mode de fonctionnement à moteur et le mode de fonctionnement à frein, dans le mode de fonctionnement à moteur au moins une bobine d'inducteur (14, 16) étant montée en série avec une bobine d'induit (12) dans un circuit électrique du moteur (66) alimenté par une tension d'alimentation (22), et dans le mode de fonctionnement à frein ladite au moins une bobine d'inducteur (14, 16) formant avec la bobine d'induit (12) un circuit électrique de frein (68) fermé et séparé de la tension d'alimentation (22), **caractérisé par** un transformateur (26, 26a, 26b, 26c) alimenté par le réseau, dont l'enroulement secondaire (30) est situé dans le circuit électrique de frein (68).

2. Moteur série selon la revendication 1, **caractérisé en ce que** ladite au moins une bobine d'inducteur (14, 16), conjointement avec au moins un enroulement de commutation (18, 20) et avec la bobine d'induit (12), forme dans le mode de fonctionnement à frein un circuit électrique (68) fermé.

3. Moteur série selon la revendication 1 ou 2, **caractérisé en ce que**, dans le mode de fonctionnement à frein, l'enroulement secondaire (30) du transformateur (26, 26a, 26b, 26c) est monté en série avec ladite au moins une bobine d'inducteur (14, 16) dans le circuit électrique de frein (68).

4. Moteur série selon la revendication 1 ou 2, **caractérisé en ce que**, dans le mode de fonctionnement à frein dans le circuit électrique de frein, l'enroulement secondaire (30) du transformateur (26a, 26b, 26c) est situé dans un circuit électrique parallèle à la bobine d'inducteur (14, 16).

5. Moteur série selon la revendication 4, **caractérisé en ce que** l'enroulement secondaire (30) du transformateur (26a) est monté en série avec une résistance (70).

6. Moteur série selon l'une quelconque des revendications précédentes, **caractérisé en ce qu'**un limiteur de tension (24), de préférence sous la forme de deux trajets de diodes reliés antiparallèlement l'un à l'autre, est monté dans le circuit électrique de frein (68) dans une voie du courant parallèle à ladite au moins une bobine d'inducteur (14, 16).

7. Moteur série selon la revendication 6, **caractérisé en ce que**, dans le circuit électrique de frein (68), l'enroulement secondaire (30) du transformateur (26) est relié par une extrémité à ladite au moins une bobine d'inducteur (16) et par l'autre extrémité à la bobine d'induit (12) et à une extrémité du limiteur de tension (24).

8. Moteur série selon la revendication 6 ou 7, **caractérisé en ce que**, dans le circuit électrique de frein (68), la bobine d'induit (12) et au moins un enroulement de commutation (18, 20) sont montés en série et sont raccordés, parallèlement au limiteur de tension (24) et à la voie du courant formée par l'intermédiaire de l'enroulement secondaire (30) du transformateur (26a) et la résistance (70), à ladite au moins une bobine d'inducteur (14, 16).

9. Moteur série à collecteur, en particulier moteur universel pour un outil électrique freiné, comportant un dispositif de commutation (S) pour basculer entre le mode de fonctionnement à moteur et le mode de fonctionnement à frein, dans le mode de fonctionnement à moteur au moins une bobine d'inducteur (14, 16) étant montée en série avec une bobine d'induit (12) dans un circuit électrique du moteur (66) alimenté par une tension d'alimentation (22), et dans le mode de fonctionnement à frein ladite au moins une bobine d'inducteur (14, 16) formant avec la bobine d'induit (12) un circuit électrique de frein (68) fermé et séparé de la tension d'alimentation (22), **caractérisé en ce qu'**il est prévu un transformateur (26, 26a, 26b, 26c) alimenté par le réseau, dont l'enroulement secondaire (30) est situé dans le circuit électrique de frein (68), **en ce que**, dans le circuit électrique de frein (68), il est prévu un dispositif de limitation (74, 74c) sous la forme d'un circuit de transistor destiné à limiter la tension induite au niveau de la bobine d'induit (12), et **en ce que**, dans le circuit électrique de frein (68), une diode (72) est montée en série avec ladite au moins une bobine d'inducteur (14, 16).

10. Moteur série selon la revendication 9, **caractérisé en ce qu'**une diode (84) est montée en série avec l'enroulement secondaire (30) du transformateur (26b, 26c).

11. Moteur série selon la revendication 9 ou 10, **caractérisé en ce que** le dispositif de limitation (74, 74c) est conçu pour générer un flux de courant parallèlement à ladite au moins une bobine d'inducteur (14, 16) lorsqu'une tension seuil est atteinte au niveau de ladite au moins une bobine d'inducteur (14, 16).

12. Moteur série selon la revendication 11, **caractérisé en ce que** le dispositif de limitation comporte un transistor à effet de champ (74) qui, lorsqu'il atteint sa tension seuil, établit la commutation pour limiter la tension qui chute au niveau de ladite au moins une bobine d'inducteur (14, 16).

13. Moteur série selon la revendication 12, **caractérisé en ce que** le transistor à effet de champ (74) est raccordé avec le drain (D) sur un côté de ladite au moins une bobine d'inducteur (14, 16), de préférence entre la diode (72) et un enroulement de commutation (18), **en ce que** le transistor à effet de champ est raccordé avec la grille (G) à un diviseur de tension (82), qui est raccordé parallèlement à ladite au moins une bobine d'inducteur (14, 16).

14. Moteur série selon l'une quelconque des revendications 9 à 11, **caractérisé en ce que** le dispositif de limitation comporte un transistor bipolaire (74c) qui est raccordé avec sa base (B), de préférence par l'intermédiaire d'une diode de Zener (84), entre la diode (72) et un enroulement de commutation (18).
